# EUROPEAN PATENT SPECIFICATION

(11) **EP 4 237 699 B1**
(45) Date of publication and mention of the grant of the patent: **16.10.2024**
(21) Application number: 21811472.6
(22) Date of filing: 27.10.2021
(51) Int. Cl.: F16D 65/12

(54) **METHOD FOR MAKING A BRAKING BAND OF A CAST IRON BRAKE DISC WITH INCREASED RESISTANCE TO WEAR AND CORROSION AND BRAKING BAND THUS OBTAINED**
VERFAHREN ZUR PRODUKTION EINER BREMSFLÄCHE EINER BREMSSCHEIBE AUS GUSSEISEN MIT ERHÖHTEN VERSCHLEISS- UND KORROSIONSFESTIGKEIT UND DAMIT ERHALTENE BREMSSFLÄCHE
PROCÉDÉ POUR PRODUIRE LA REGION DE FREINAGE D'UN DISQUE DE FREIN AVEC RÉSISTENCE À CORROSION ET USURE AUGMENTÉE ET REGION DE FREINAGE AINSI OBTENUE

(30) Priority: 28.10.2020 IT 202000025549
(43) Date of publication of application: 06.09.2023
(73) Proprietor: Brembo S.p.A., 24035 Curno (Bergamo) (IT)
(72) Inventor: CARMINATI, Fabiano, 24035 Curno, Bergamo (IT); VAVASSORI, Paolo, 24035 Curno, Bergamo (IT)
(74) Representative: Zanettin, Gianluigi
(86) International application number: PCT/IB2021/059925
(87) International publication number: WO 2022/090956

(56) References cited:
- EP-A2- 1 006 218
- WO-A1-2020/128740
- CN-A- 107 699 849
- DE-A1- 102015 204 813
- GB-A- 689 224
- US-A1- 2016 215 839

## Description

### Field of application

The present invention relates to a method for making a braking band of a cast iron brake disc with increased resistance to wear and corrosion and a braking band thus obtained.

### Background art

A brake disc of a disc brake system of a vehicle comprises an annular structure, or braking band, and a central fixing element, known as the bell, by means of which the disc is fixed to the rotating part of a vehicle suspension, e.g., a hub. The braking band is provided with opposing braking surfaces suitable to cooperate with friction elements (brake pads), housed in at least one caliper body placed straddling the braking band and integral with a non-rotating component of the vehicle suspension. The controlled interaction between the opposing brake pads and the opposite braking surfaces of the braking band determines a braking action by friction which allows the deceleration or stopping of the vehicle.

Generally, the braking band of a brake disc is made of cast iron, in particular gray cast iron, or steel. Indeed, the cast iron allows to obtain good braking performance (especially in terms of wear containment) at a relatively low cost. Braking bands made of carbon or carbon-ceramic materials offer much greater performance, but at a much higher cost.

While being harder than many metals, cast iron wears out during the operation of the brake disc, thereby reducing the thickness of the braking band and thus limiting the service life of the brake disc.

Another limitation of cast iron is related to the fact that it rapidly corrodes following exposure to water, in particular if in the presence of salts (sodium chloride, potassium chloride). This creates a layer of oxide on the surface of the braking band which can cause braking problems, in addition to being unsightly, until it is removed.

Several strategies have been implemented for treating the braking bands of cast iron brake discs to overcome these problems and are diagrammatically listed below:
- Application of surface coatings: coatings based on hard, wear-resistant materials (chromium and tungsten carbides, aluminum oxides, etc.) are applied to the surface of the cast iron braking band. There are various techniques for applying such coatings; the most used technique is the "Thermal Spray" of ceramic powders mixed to appropriate metal matrices that allow the adhesion of the coating to the cast iron. The thermal spray technique is preferred over other film deposition methods because it allows for higher productivity and utilization of the above-mentioned materials. The main limitation of this technique is the relatively high cost if referred to the application on cast iron brake discs;
- Reactive/diffusive processes: these are processes in which the cast iron is made to react with other substances which modify its chemical-physical state, increasing its surface properties. These include carburization, nitriding, and borating. The reactions can occur in either the gas or liquid phase. The main limitations of this type of process are the limited increase in performance, the long treatment times and, in some cases, the excessively high processing temperatures which are not compatible with the need to contain distortions on the cast iron disc. Document US 2016/215839 A1 discloses a brake disc according to the state of the art, produced by immersing the iron material in aluminium bath.
- "In-situ" forming processes: these are processes which involve the formation of surface layers on the braking band, made of materials with appropriate characteristics, during the formation of the braking band itself, i.e., during the casting of the molten cast iron in the die. Before casting elements/substances, which in contact with the molten cast iron cause the formation of new compounds or simply incorporate elements with the desired properties, are introduced into the die. The main limitation of processes of this type is related to the fact that the cast iron braking band manufacturing process is significantly complicated. Furthermore, in some cases, heat treatments are required at temperatures incompatible with the need to contain distortions on the cast iron disc.

Therefore, the need is strongly felt to have a method for making braking bands of cast iron brake discs which allows to form a surface layer on the surface of the braking band with characteristics of high resistance to wear and corrosion and which completely or at least partially overcomes the operational limitations of the prior art described above.

### Disclosure of the invention

Therefore, it is an object of the present invention to eliminate, or at least reduce, the aforementioned problems related to the prior art by making available a method for making a braking band of a cast iron brake disc with increased wear and corrosion resistance which does not result in a significant increase in production costs.

It is a further purpose of the present invention to provide a method for making a braking band of a cast iron brake disc having increased wear and corrosion resistance, which does not result in a significant increase in production time.

It is a further purpose of the present invention to provide a method for making a braking band of a cast iron brake disc having increased wear and corrosion resistance, which can be performed at processing temperatures compatible with the requirement to contain distortion on the braking band.

### Solution of the problem

The technical problem is solved by means of a method of making a braking band according to claim 1 and a brake band according to claim 21.

### Description of the drawings

The technical features of the invention may be clearly found in the contents of the claims presented below and the advantages thereof will become more apparent from the following detailed description, made with reference to the accompanying drawings, which show one or more embodiments thereof, merely given by way of non-limiting examples, in which:
- Figure 1 shows a flow chart of the method according to the invention according to a general embodiment;
- Figures 2, 3, and 4 show flow charts of the method according to the invention according to preferred embodiments;
- Figure 5 shows an SEM image obtained with a scanning electron microscope on a cast iron sample provided with a layer of intermetallic compounds, obtained according to the method of the invention, by means of aluminization at 700°C for about 1 minute, without prior surface decarburization;
- Figure 6 shows an SEM image obtained with a scanning electron microscope on another cast iron sample provided with a layer of intermetallic compounds, obtained according to the method of the invention, by aluminization at 700°C for about 1 minute, with prior surface decarburization;
- Figure 7 shows an SEM image under high magnification (2000x) obtained with a scanning electron microscope on a braking band sample according to the invention.

Elements or parts in common to the embodiments described will be indicated hereafter using the same reference numerals.

### Detailed description

The present invention relates to a method for making a braking band of a cast iron brake disc with increased resistance to wear and corrosion and braking band thus obtained.

The making method will be described first, followed by the description of the braking band obtained by such a method.

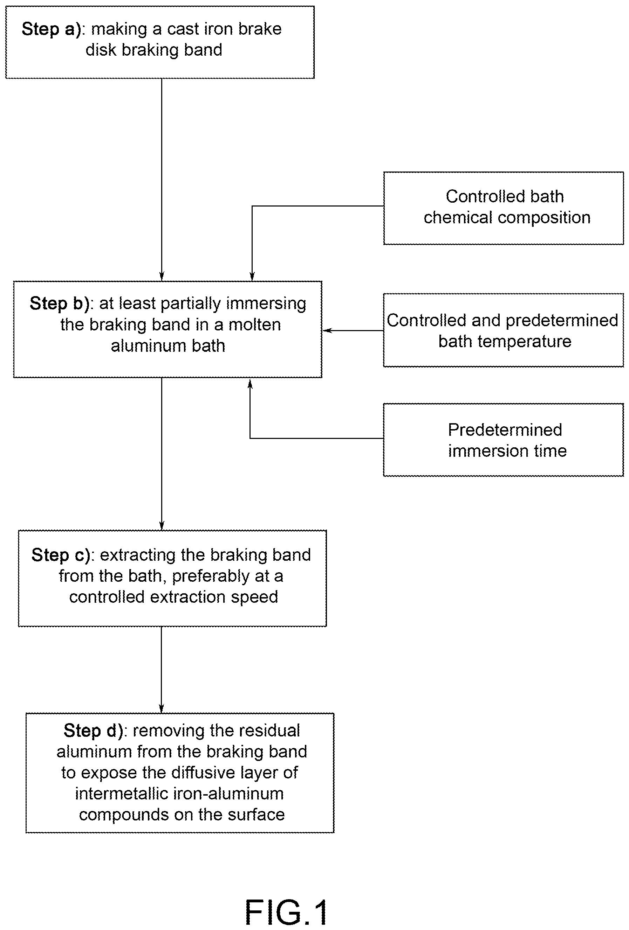

According to a general embodiment of the invention, illustrated in the chart in Figure 1, the method for making a braking band of a cast iron brake disc with increased resistance to wear and corrosion comprises the following operational steps:
a) make a braking band of a brake disc of cast iron, preferably of gray cast iron;
b) immersing at least partially the braking band in molten aluminum maintained at a predetermined temperature so that the molten aluminum covers at least a predetermined surface region of said braking band.

According to the invention, the molten aluminium has a silicon content less than 1% by weight.

The immersion in the molten aluminum is prolonged for a predetermined period of time so as to allow the diffusion of aluminum atoms in the cast iron surface microstructure with the consequent formation of intermetallic iron-aluminum compounds at a surface layer of the braking band, thereby generating in said predetermined surface region of said braking band a layer consisting of intermetallic iron-aluminum compounds.

The method comprises the following further operational steps:
c) extracting the braking band from the molten aluminum;
d) removing the aluminum which remained adherent on said braking band after the extraction and which did not react with the cast iron, so as to expose said layer of intermetallic iron-aluminum compounds on the surface.

It has been experimentally found that the aforesaid intermetallic iron-aluminum compound layer exposed in the surface confers a higher corrosion and wear resistance to said cast iron braking band at said predetermined surface region compared to the case in which the cast iron braking band is free from the coating and the cast iron is directly exposed in the surface.

The properties conferred by the intermetallic iron-aluminum compound layer are maintained over time by virtue of the fact that such a layer combines corrosion resistance and wear resistance. In other words, the protective layer made of intermetallic iron-aluminum compounds is less attackable not only chemically, but also mechanically, as a result of the rubbing caused by the braking action applied by the pads on the braking band. This synergistically contributes to preserving it during the operational life of the braking band.

Compared to the aforementioned traditional techniques for treating the braking bands of cast iron brake discs (application of surface coatings; reactive/diffusive processes; "in-situ" forming processes), the method according to the invention is operationally simpler to implement because it does not require the use of complex plants to build and operate.

Furthermore, the method according to the invention requires relatively short performance times, at least with regard to steps b), c), and d).

Thus, the method according to the invention allows to make a braking band of a cast iron brake disc with increased wear and corrosion resistance to be manufactured in a technically simple manner, without involving a significant increase in cost and production time.

More in detail, the aforesaid layer of intermetallic iron-aluminum compounds is formed at a surface layer of said cast iron braking band in contact with the molten aluminum by a diffusion process of aluminum atoms within the cast iron structure and formation of intermetallic iron-aluminum compounds.

The aforesaid intermetallic iron-aluminum compound layer may comprise a plurality of intermetallic iron and aluminum compounds, in particular Fe₃Al, FeAl, FeAl₂, FeAl₃, Fe₂Al₅. The predominant intermetallic phase is FeAl₃ because it is thermodynamically more stable.

Preferably, the aforesaid predetermined temperature at which the molten aluminum is maintained is not less than 680°C.

Advantageously, the aforesaid predetermined temperature at which the molten aluminum is maintained is not greater than 750°C, and is preferably comprised between 690°C and 710°C, and even more preferably equal to 700°C. Such temperature values constitute a good compromise between the need to promote the formation of intermetallic compounds and the need to preserve unaltered geometric characteristics of the braking band. Indeed, at such temperature values of molten aluminum, the chemical reaction between iron and aluminum is fast enough to allow a rapid formation of the intermetallic layer and the distortions induced on the braking band are within acceptable tolerances from an operational point of view.

Operationally, the growth thickness of the aforesaid layer of intermetallic compounds is mainly biased by the temperature of the molten aluminum and the immersion time in the molten aluminum. The temperature of the molten aluminum being equal, the thickness increases as the immersion time increases; the immersion time being the same, the thickness increases as the temperature of the molten aluminum increases.

Advantageously, as the temperature of the molten aluminum is the parameter most subject to constraints to avoid distortions on the braking band, the thickness of the layer of intermetallic compounds is controlled substantially by acting on the duration of the immersion time in the molten aluminum. The predetermined period of immersion time is then set as a function of the desired thickness of said intermetallic compound layer, taking into account the temperature of the molten aluminum.

Preferably, if the molten aluminum is maintained at a temperature of between 690°C and 710°C, the aforementioned predetermined immersion time is comprised between 5 and 60 min, and even more preferably equal to 30 min, to obtain a layer of intermetallic compounds comprised between 30 and 150 µm.

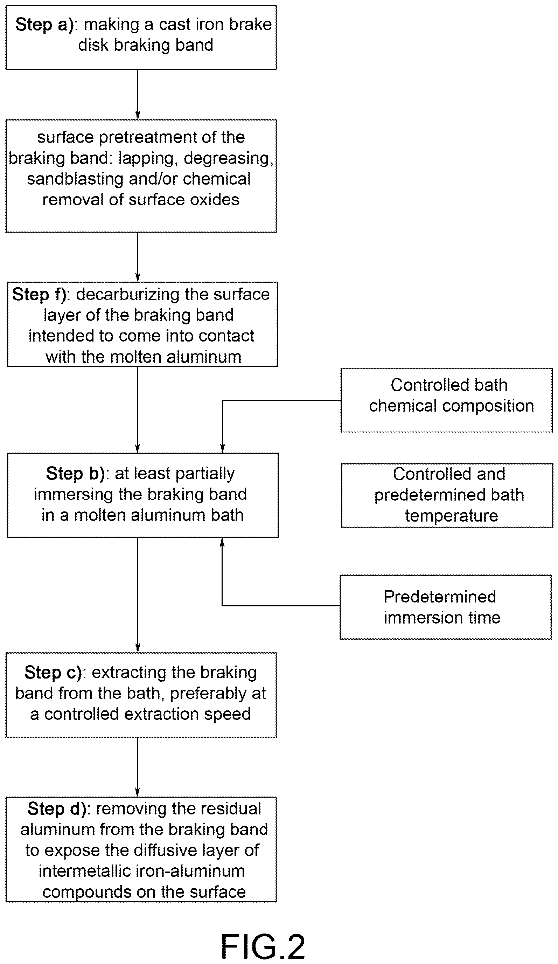

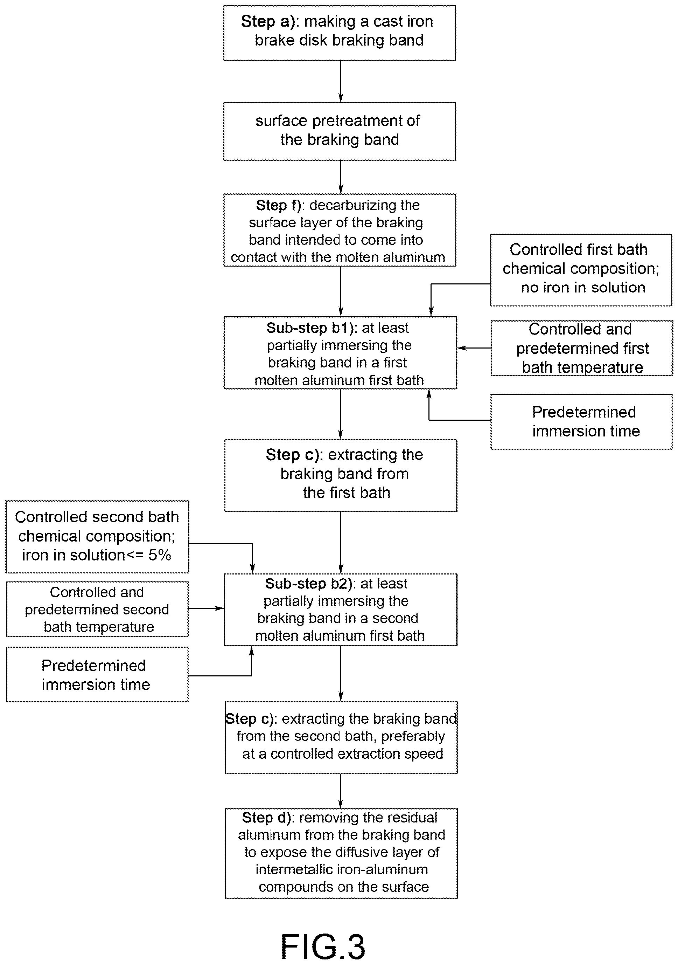

In accordance with a preferred embodiment of the method, illustrated in the charts of Figures 2 and 3, the method comprises a **step f) of decarburization** of the aforementioned at least one predetermined surface region of the braking band (intended to come into contact with the molten aluminum) up to a predetermined depth.

Operationally, said step f) of decarburization is performed before said step b) of immersion and is suitable to make, at least at said predetermined surface region, a surface layer substantially free of carbon, in particular free of graphite flakes, having a thickness, which extends from the outer surface of said braking band up to the aforesaid predetermined depth.

Advantageously, the decarburized surface layer has a depth substantially either equal to or greater than the depth of the intended layer of intermetallic iron-aluminum compounds. Operationally, the decarburization is thus performed up to a depth from the outer surface of said braking band either equal to or greater than the depth of the intermetallic iron-aluminum compound layer to be obtained. Preferably, the predetermined decarburization depth is 30 µm or greater.

Advantageously, step f) of decarburization is aimed at preparing in the braking band a surface layer which facilitates the formation (by aluminization) of a more homogeneous and compact layer of intermetallic compounds.

Indeed, it has been experimentally found that, by subjecting a braking band not superficially decarburized to aluminization (immersion in molten aluminum), the intermetallic compound layer obtained is very inhomogeneous, with large detached zones and strong variability in the grown thickness. Furthermore, the growth structure appears very granular.

On the contrary, by subjecting a superficially decarburized braking band made of cast iron to aluminization (immersion in molten aluminum), the intermetallic compound layer obtained is homogeneous and substantially continuous, not interrupted by graphite flakes.

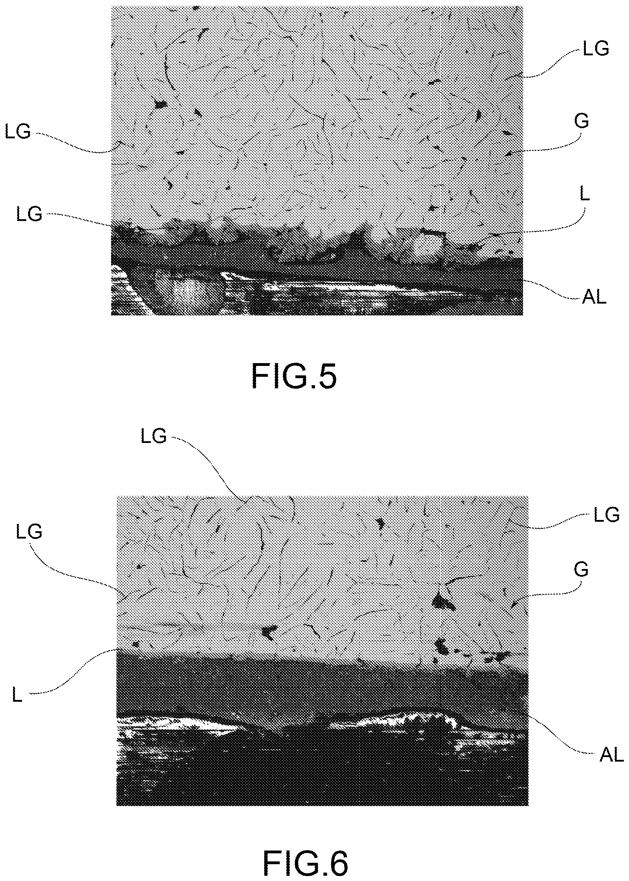

This is apparent by comparing figures 5 and 6, which show SEM images obtained with a scanning electron microscope on two cast iron samples subjected to aluminization at 700°C for about 1 minute. Figure 5 refers to a sample subjected to aluminization without prior surface decarburization, while figure 6 refers to a sample subjected to aluminization with prior surface decarburization. In Figures 5 and 6, the intermetallic compound layer is indicated by L, the residual aluminum layer by Al, and the unmodified cast iron by G; the graphite flakes are indicated by LG.

The different morphology of the intermetallic compound layer present on a non-decarburized braking band and on a superficially decarburized braking band is thus attributable to the presence or absence of carbon, in particular in the form of graphite flakes, in the surface layer subject to the diffusive effects of the aluminization process. In particular, it was found that the presence of graphite flakes has a strong effect of reducing the surface wettability by liquid aluminum. In addition to this, the presence of graphite flakes has the further ability to slow down the growth of the intermetallic compound layer, which in non-decarburized cast iron, indeed, appears "patchy" and still far from being a continuous rather than a compact layer.

It has been experimentally found that the presence of carbon in the surface layer of the braking band subject to diffusion penetration of aluminum atoms (induced by aluminization) also leads to the formation of iron carbide as well as intermetallic compounds. The presence of iron carbide creates points of discontinuity in the intermetallic compound layer, which can trigger corrosive phenomena and cracking. Advantageously, the surface decarburization thus allows to avoid (or at least significantly reduce) the formation of iron carbide, leading to the formation of an intermetallic compound layer which is more resistant to corrosion and less prone to cracking.

Preferably, in said step f), the decarburization of said at least one predetermined surface region is carried out by means of an electrolytic process.

More in detail, said electrolytic process is carried out by immersing the predetermined surface region of said braking band in a molten salt bath and applying an electrical potential difference between the bath and the braking band.

In applying the electrical potential difference, the braking band is connected to a positive pole (cathode), while the aforementioned molten salt bath is connected to a negative pole (anode). Carbon, in particular in the form of graphite flakes, is oxidized to carbon dioxide by the release of electrons and atomic oxygen released at the anode. Carbon reacts primarily with oxygen and is eventually bound as carbon dioxide.

The oxidation of the surface of the braking band induced by the electrolytic process is not limited to the carbon present there, but also extends to the metal matrix of the cast iron (iron), causing the formation of a surface film of metal oxide. Reversing the polarity causes a reduction in the surface film of metal oxide, which is thus restored to its original metallic state.

Preferably, the aforementioned electrolytic process may thus provide that, after a predetermined period of time in which the surface of the braking band was connected to the cathode to oxidize the carbon, the polarity is reversed to return the metal oxide film to its original metallic state.

Advantageously, during the performance of the electrolysis process, the polarity reversal can be repeated several times in sequence.

Operationally, the decarburization depth is controlled by adjusting the duration of the electrolytic process, possibly divided into several polarity reversal cycles. By increasing the duration of the decarburization process (braking band oxidation step; cathode connection), the depth of decarburization increases, all other conditions being equal.

Decarburization can be achieved by alternative processes to the electrolytic process described above, such as by laser treatment or chemical treatment. However, the decarburization by the electrolytic process is preferred because:
- it is much more efficient and rapid than a laser treatment, ensuring a more complete and uniform carbon removal in less time;
- it is much more efficient than a chemical treatment (e.g. with potassium permanganate) (ensuring more complete and uniform removal of carbon in less time) and does not leave areas of oxidation of the cast iron metal matrix on the treated portion.

In more detail, it has been observed that at the oxidized areas on the cast iron metal matrix, the wettability of the molten aluminum is greatly reduced, which negatively affects the aluminization process and the characteristics of the intermetallic compound layer. Also for this reason, the electrolytic decarburization process is preferred over the alternative processes indicated above.

As mentioned above, the growth thickness of the aforesaid intermetallic compound layer is mainly affected by the temperature of the molten aluminum and the immersion time in the molten aluminum. However, it was found that an additional factor which biases the thickness of the intermetallic compound layer is the silicon content in the molten aluminum. The higher the weight content of silicon in the molten aluminum, the thinner the intermetallic compound layer, all other conditions being equal. According to the invention, the molten aluminum has a silicon content of less than 1% by weight.

Preferably, the molten aluminum has an impurity content of no more than 1% by weight. In particular, aluminum with a maximum purity of 99.7% by weight may be used, with the following impurities (% by weight): Si ≤ 0.30%; Fe ≤0.18%; Sr ≤0.0010%; Na ≤0.0025%; Li ≤0.0005%; Ca ≤0.0020%; P ≤0.0020; Sn ≤0.020%.

Two opposite diffusive processes occur during the aluminization process: on the one hand, the migration of iron from the cast iron metal matrix to the aluminum bath, and on the other hand, the migration of aluminum from the aluminum bath to the cast iron metal matrix. The kinetics of dissolving iron in aluminum (and the subsequent migration of iron to the aluminum bath) is extremely rapid, with an order of magnitude comparable to that of the reaction for forming intermetallic compounds and in particular FeAl3 (Fe + 3Al → FeAl3). Therefore, such two processes are both very rapid and occur at the same time.

It was found in some cases that, although the braking band had been subjected to decarburization and thus the graphite flakes had been eliminated from a surface layer at which the intermetallic compound layer would have been formed, the resulting intermetallic compound layer continued to include graphite flakes, as if they had never been eliminated. Such a phenomenon can be explained by the fact that the dissolution of iron in aluminum is so rapid that the decarburized layer is rapidly consumed and consequently metal compounds are formed in the layer below the decarburized layer, i.e., where graphite flakes are present.

In other words, the excessive solubility of iron in molten aluminum can cancel out, either in whole or in part, the beneficial effects of surface decarburization of the braking band.

Advantageously, step b) of immersion in a molten aluminum bath in which iron has been dissolved can be performed to slow down the dissolution of iron in the aluminum bath. In this manner, inhibiting the dissolution of iron in aluminum kinematically promotes the formation of FeAl3, so that intermetallic compounds can form at the decarburized layer.

Preferably, the content of iron in solution in the aluminum bath is no more than 5% by weight (solubility limit of iron in aluminum; iron-saturated aluminum) and even more preferably is comprised between 3% and 5%, and quite preferably equal to 4% by weight to ensure a significant effect of slowing down the process of dissolving iron of cast iron in aluminum.

For example, an aluminum bath with the following composition (% by weight) can be used: Al ≤ 97%; Fe 3-5%; with the following impurities: Si ≤ 0.30%; Fe ≤0.18%; Sr ≤0.0010%; Na ≤0.0025%; Li ≤0.0005%; Ca ≤0.0020%; P ≤0.0020; Sn ≤0.020%.

It has been experimentally observed that more porous intermetallic compound layers are obtained by performing the aluminization with an aluminum bath with iron in solution, especially if the iron content is close to the solubility limit. This can be explained by a higher viscosity of the molten aluminum bath containing iron and a consequent reduction in its wettability compared to cast iron.

Advantageously, as shown in the chart in Figure 3, the above-mentioned step b) of immersion is carried out in two sub-steps to form an intermetallic compound layer which is compact and uniform, and thus not very porous, while at the same time preventing such a layer from developing below the decarburized layer and incorporating the graphite flakes present therein:
- a first sub-step b1) of immersion in a first bath of molten aluminum, substantially free of iron in solution (or at most present as impurity; e.g., with an iron content lower than 0.20% by weight), to obtain an initial layer consisting of intermetallic iron-aluminum compounds on said predetermined surface region; and
- a second sub-step b2) of immersion in a second molten aluminum bath, containing iron in solution, to increase said initial layer until a final layer consisting of intermetallic iron-aluminum compounds with a predetermined thickness is obtained on said predetermined surface region.

The immersion time of said braking band in said first bath is less than the immersion time of said braking band in said second bath.

Preferably, the immersion of said braking band in said first bath is prolonged a time which is for as short as possible but sufficient to obtain an initial layer consisting of iron-aluminum intermetallic compounds having a thickness not exceeding 10 µm on said predetermined surface region. In particular, the immersion time in said first bath is comprised between 3 and 5 minutes if the first bath is at a temperature of about 700°C. The immersion time must decrease as the bath temperature increases.

Operationally, it was observed that the initial intermetallic compound layer formed during the first sub-step b1) of immersion increases the wettability of the braking band by the second bath containing iron in solution. This allows to significantly reduce the porosity of the intermetallic compound layer which grows in the subsequent second sub-step b2) starting from the initial layer.

Advantageously, the immersion time of said braking band in said second bath is fixed as a function of the thickness to be obtained for said final intermetallic compound layer.

In more detail, the thickness increases as the immersion time increases, the temperature of the second bath being equal, and the thickness increases as the temperature of the second bath increases, the immersion time being equal.

Advantageously, both said first molten aluminum bath and said second bath have an impurity content of not more than 1% by weight. In particular, said two molten aluminum baths have a silicon content of less than 1% by weight.

Preferably, the content of iron in solution in the second aluminum bath is no more than 5% by weight (the solubility limit of iron in aluminum at 700°C is equal to 4% by weight; iron-saturated aluminum) and even more preferably is comprised between 3% and 5%, and quite preferably 4% by weight. The iron content must not be less than 3% to ensure a significant effect of slowing down the process of dissolving the iron from cast iron into aluminum.

Advantageously, both said first bath and said second bath are maintained at a temperature below 680°C, preferably not more than 750°C, more preferably comprised between 690°C and 710°C, and even more preferably 700°C.

Advantageously, the method may comprise a step of surface pre-treatment of the braking band which is carried out before said step b) of immersion at least at said predetermined surface region. Preferably said surface pretreatment step comprises lapping, degreasing, sandblasting and/or chemical removal of surface oxides.

Preferably, the method comprises a step of removing a surface layer of oxides from the molten aluminum bath before said step b) of immersion. Such a step of surface oxide removal is carried out both if the immersion is in a single bath and if immersion is in two successive steps in a first and second bath.

Advantageously, the aforesaid step (c) of extracting the braking band from the molten aluminum is carried out by controlling the extraction speed as a function of the bath viscosity, to adjust the amount of molten aluminum which remains adhered to the braking band.

If the braking band is immersed in a first bath (without iron, or present at most as an impurity) and then in a second bath with iron in solution, the extraction procedure from the first bath in solution is irrelevant because the excess aluminum will re-melt when immersed in the second bath.

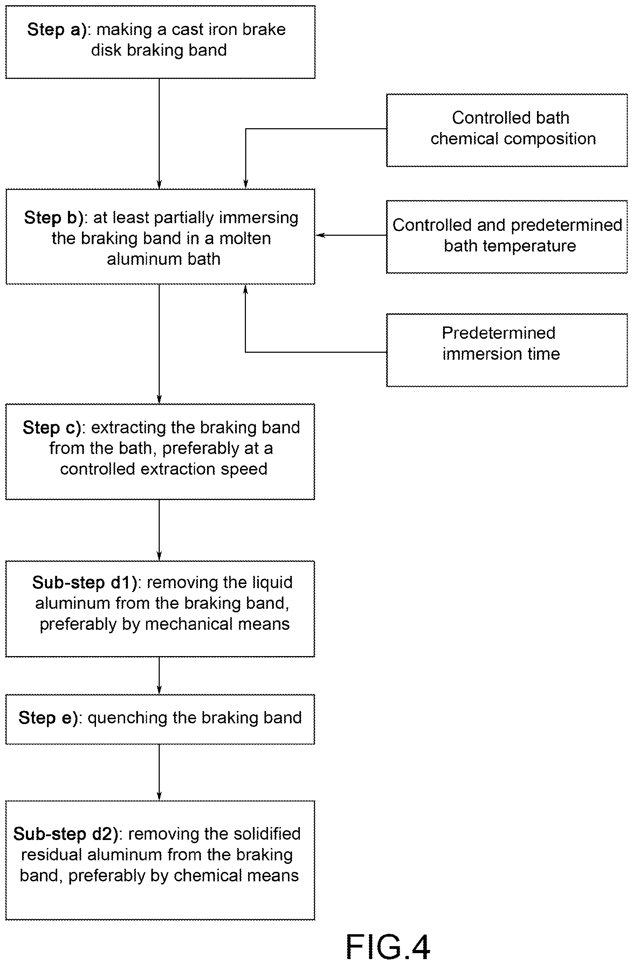

According to a preferred embodiment of the invention, shown in particular in the diagram of Figure 4, the step d) of removing the aluminum remaining adherent on said braking band after extraction is carried out in two sub-steps:
- a first sub-step d1) of removal is carried out on the braking band just extracted from the molten aluminum to remove the still molten aluminum remaining adhered to the braking band; and
- a second sub-step d2) of removal is carried out on the braking band extracted from the molten aluminum and cooled to remove the solidified residual aluminum remaining after said first sub-step d2) of removal.

Preferably, the method comprises a step e) of quenching of said braking band carried out between said first sub-step d1) of removal and said second sub-step d2) of removal.

Advantageously, said first sub-step d1) of removal may be carried out by mechanical shaving of the still liquid aluminum.

Advantageously, said second sub-step d2) of removal can be carried out by chemical removal of solidified aluminum not mechanically removed.

Preferably, the aforesaid chemical removal is carried out by exposing the aluminum to ferric chloride for at least 4 minutes so as to cause the following reaction:

Al+ FeCl₃ -> AlCl₃ + Fe

The chemical removal by ferric chloride must necessarily occur after aluminum solidification. Ferric chloride boils at 315°C and therefore cannot be brought into contact with molten aluminum. Preferably, said chemical removal is thus carried out after said step e) of quenching.

A braking band of a cast iron brake disc with increased resistance to wear and corrosion according to the invention will now be described.

Such a braking band is made according to the method of the invention as described above. Therefore, the making method will not be described again, and reference should be made to that described above for the sake of brevity.

According to a general embodiment of the invention, the disc braking band comprises a braking band body made of cast iron (gray cast iron or lamellar cast iron).

Said braking band body has at least one braking surface, comprising at at least one portion of said braking surface a protective surface layer.

According to the invention, such a protective surface layer is a surface layer comprising one or more intermetallic iron-aluminum compounds.

It has been experimentally found that the aforesaid intermetallic iron-aluminum compound layer exposed in the surface confers a higher corrosion and wear resistance to said cast iron braking band at said predetermined surface region compared to the case in which the cast iron braking band is free from the coating and the cast iron is directly exposed in the surface.

The aforesaid intermetallic iron-aluminum compound layer may comprise a plurality of intermetallic iron and aluminum compounds, in particular Fe₃Al, FeAl, FeAl₂, FeAl₃, Fe₂Al₅. The predominant intermetallic phase is FeAl₃ as it is thermodynamically more stable.

According to a preferred embodiment, the aforesaid protective surface layer substantially does not comprise carbon, in particular it does not comprise graphite flakes.

In particular, the aforesaid intermetallic iron-aluminum compound layer is a diffusive layer, interpenetrating with the cast iron microstructure.

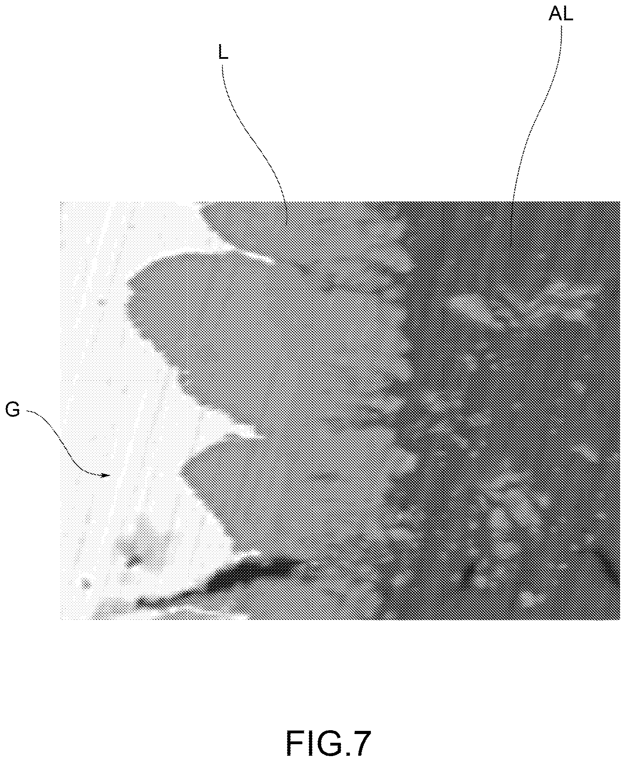

As illustrated in Figure 7, which represents a high-magnification (2000x) SEM image obtained by scanning electron microscopy on a braking band sample according to the invention, said diffusive layer, interpenetrated with the cast iron microstructure, has a jagged interpenetration profile, in particular a jagged interpenetration profile having the shape of shark teeth. This profile is typical of all diffusive phenomena in solids in which the diffusion front encounters crystalline structures which locally block diffusion, as in the case of cast iron.

In Figures 7, the intermetallic compound layer is indicated by L, the residual aluminum layer by Al, and the unmodified cast iron by G.

Preferably, said intermetallic iron-aluminum compound layer has an average thickness comprised between 30 and 200 µm. The thickness is chosen as a function of the wear resistance properties that the braking band must guarantee during use.

Preferably, said braking surface has a hardness comprised between 400 and 1000HV at said layer of intermetallic iron-aluminum compounds. The hardness is variable as a function of the specific composition of the protective layer. Fe₂Al₅ has a hardness of 600-700 HV, while FeAl₃ has a hardness of 900-1000 HV.

Some application examples of the method according to the invention carried out on samples consisting of gray cast iron discs are illustrated below. Similar results were obtained on samples of lamellar cast iron.

### EXAMPLE 1

A gray cast iron sample, consisting of a 50 mm diameter, 6 mm thick disc, was initially subjected to an electrolytic decarburization process allowed removing the graphite flakes to a depth of at least 100 microns.

The sample was then pickled by immersing it in 37% vol hydrochloric acid for 30 seconds and then washed with demineralized water.

Immediately after pickling, the sample was immersed in succession in two different molten aluminum baths.

The first bath had the following composition: Al 99.7% by weight, containing the following impurities (% by weight): Si ≤ 0.30%; Fe ≤0.18%; Sr ≤0.0010%; Na ≤0.0025%; Li ≤0.0005%; Ca ≤0.0020%; P ≤0.0020; Sn ≤0.020%.

The second bath had the same composition as the first bath with the addition of 4% by weight of 98.5% pure iron powder.

Both baths were maintained at a temperature of 700°C. The control of this temperature is ±10°C, and therefore no differences are appreciable between 690 and 710°C.

The immersion time in the first bath was 3 min, while the immersion time in the second bath was 30 min.

The extraction method from the first bath is irrelevant because even if a relatively thick layer of Al (1-2 mm) to remains adhered to the sample, it would re-melt in the second bath. In contrast, the extraction from the second bath was carried out rapidly, with times on the order of 1 second. The slower the extraction process, the greater the thickness of aluminum that remains adhered to the surface.

As soon as it was extracted from the second bath, with the aluminum still molten on the surface, the sample was shaved very quickly by passing a steel blade. The aluminum immediately solidified after just one pass of the blade. The thickness of the remaining aluminum was on the order of 0.1 to 0.3 mm.

Afterward, the sample was immersed in 40% wt. ferric chloride aqueous solution for 40 min. It was then washed with demineralized water. In this manner, the aluminum was removed almost completely from the surface.

At the end of the process described above, the sample had a layer of iron-aluminum intermetallic compounds having an average thickness of about 100 microns, with variation ± 30 microns.

Under the electron microscope, the intermetallic compound layer appeared very compact and homogeneous.

The intermetallic layer had an average hardness value of not less than 400 HV.

The sample was tested in a climatic cell according to UNI EN ISO 6270-2 CH (condensation water). The entire duration of the test was 120 h. The surface sample was corrosion-free for approximately 75% of the surface area. The sample had pronounced corrosion only in a central sector triggered after 1 hour. The scanning electron microscopic analysis showed that there were no signs of condensation water penetration down to the cast iron. Therefore, it can be concluded that the intermetallic compound layer preserved the iron in the cast iron from oxidation.

### EXAMPLE 2

A gray cast iron sample, consisting of a 50 mm diameter, 6 mm thick disc, was subjected to the same process as described in example 1, except for the initial decarburization process, which was not carried out.

At the end of the process described above, the sample had a layer of iron-aluminum intermetallic compounds having an average thickness of about 100 microns, with variation ± 30 microns.

Under the scanning electron microscope, the intermetallic compound layer appeared inhomogeneous as the one obtained in the sample of example 1. Indeed, the intermetallic layer alternated large, very homogeneous, and compact zones with some (less extensive) fractured and defective (porous) zones. It was hypothesized that probably, as the coating grew on undecarburized cast iron, the first aluminum bath would leave some graphite flakes exposed on the surface. The zones of the sample which have graphite flakes fail to be well wetted by the second bath and give rise to porosity in the coating.

The intermetallic layer had an average hardness value of not less than 400 HV.

This sample was also tested in a climatic cell according to UNI EN ISO 6270-2 CH (condensation water). The entire duration of the test was 120 h. After testing, the above porous zones were found to be subject to earlier corrosion than the rest of the layer. With the exception of these zones, the coating appeared well homogeneous and compact.

Despite the presence of zones subject to early corrosion on the coating, the scanning electron microscopic analysis showed that there were no signs of condensation water penetration down to the cast iron. Therefore, it can be concluded that despite the earlier localized corrosion phenomena in the porous zones, the intermetallic compound layer preserved the iron in the cast iron from oxidation.

### EXAMPLE 3

A gray cast iron sample, consisting of a 50 mm diameter, 6 mm thick disc, was subjected to the same process as described in example 2. The only difference is the immersion time in the first bath: 30 seconds instead of 3 minutes. At the end of the process, the sample was subjected to the same tests as the samples in the previous examples.

Also in this case, the sample had an intermetallic iron-aluminum compound layer having an average thickness of about 100 microns, with variation ± 30 microns.

Unlike the previous examples, the intermetallic compound layer appeared to have a two-layer structure under the scanning electron microscope. A first (innermost) layer had a lot of porosity and defects and a patchy conformation. Above this first layer was a second, more homogeneous, and compact layer, which, however, maintained a high degree of defects within it, induced by the structure of the first intermetallic layer. It has been hypothesized that this phenomenon, in addition to being related to the presence of graphite flakes on the surface (absence of surface decarburization), is due to the significantly shorter duration of immersion in the first bath.

The intermetallic layer had an average hardness value of not less than 400 HV.

Also this sample was tested in a climatic cell according to UNI EN ISO 6270-2 CH (condensation water). The entire duration of the test was 120 h. After testing, the porous zones were found to be subject to earlier corrosion than the rest of the layer.

Despite the presence of zones subject to early corrosion on the coating, the scanning electron microscopic analysis showed that there were no signs of condensation water penetration down to the cast iron. Therefore, it can be concluded that despite the earlier localized corrosion phenomena in the porous zones, the intermetallic compound layer preserved the iron in the cast iron from oxidation.

### EXAMPLE 4

A gray cast iron sample, consisting of a 50 mm diameter, 6 mm thick disc, was subjected to the same process as described in example 1, with the following differences:
- the sample was not previously decarburized; and
- the immersion was done in a single molten aluminum bath having the composition of the first bath of example 1, with an immersion time of 30 minutes and a temperature of 700°C.

At the end of the process, the sample was subjected to the same tests as the samples in the previous examples.

Also in this case, at the end of the process described above, the sample had a layer of iron-aluminum intermetallic compounds having an average thickness of about 100 microns, with variation ± 30 microns.

Under the electron microscope, the layer of intermetallic compounds appeared inhomogeneous. Indeed, the intermetallic layer alternated very homogeneous and compact zones with fractured zones with defects (pinholes). Also in this case, it was hypothesized that the surface porosity, in addition to being related to the presence of graphite flakes on the surface (absence of surface decarburization), is due to the lack of immersion in the second saturated iron bath.

The intermetallic layer had an average hardness value of not less than 400 HV.

Also this sample was tested in a climatic cell according to UNI EN ISO 6270-2 CH (condensation water). The entire duration of the test was 120 h. After testing, the porous zones were found to be subject to earlier corrosion than the rest of the layer. With the exception of these zones, the coating appeared well homogeneous and compact.

Despite the presence of zones subject to early corrosion on the coating, the scanning electron microscopic analysis showed that there were no signs of condensation water penetration down to the cast iron. Therefore, it can be concluded that despite the earlier localized corrosion phenomena in the porous zones, the intermetallic compound layer preserved the iron in the cast iron from oxidation.

### EXAMPLE 5

A gray cast iron sample, consisting of a 50 mm diameter, 6 mm thick disc, was subjected to the same process as described in example 1, except that the superficially decarburized sample was immersed only in the first (substantially iron-free) bath for 30 minutes.

At the end of the process described above, the sample had a layer of iron-aluminum intermetallic compounds having an average thickness of about 100 microns, with variation ± 30 microns.

Under the scanning electron microscope, the intermetallic compound layer appeared inhomogeneous as the one obtained in the sample of example 1. Indeed, the intermetallic layer alternated large, very homogeneous, and compact zones with some (less extensive) fractured and defective (porous) zones. It was hypothesized that probably, although the coating grew on decarburized cast iron, the aluminum bath (not being saturated with iron) dissolved iron from the decarburized surface causing the underlying graphite flakes to emerge and thus canceling out the effect of the decarburization. The zones of the sample which have the graphite flakes that emerged after decarburization, fail to be well wetted by the second bath and give rise to porosity in the coating.

The intermetallic layer had an average hardness value of not less than 400 HV.

Also this sample was tested in a climatic cell according to UNI EN ISO 6270-2 CH (condensation water). The entire duration of the test was 120 h. After testing, the above porous zones were found to be subject to earlier corrosion than the rest of the layer. With the exception of these zones, the coating appeared well homogeneous and compact.

Despite the presence of zones subject to early corrosion on the coating, the scanning electron microscopic analysis showed that there were no signs of condensation water penetration down to the cast iron. Therefore, it can be concluded that despite the earlier localized corrosion phenomena in the porous zones, the intermetallic compound layer preserved the iron in the cast iron from oxidation.

The invention allows obtaining several advantages which have been explained throughout the description.

In particular, the application examples illustrated above highlight how the method according to the invention allows making a braking band of a cast iron brake disc which is provided with a coating which imparts a higher resistance to wear and corrosion to the braking band.

Indeed, in all examples, the coating obtained, consisting of a layer of intermetallic iron/aluminum compounds, displays hardness values higher than bare cast iron, not less than 400 HV.

The coating obtained, although it has different homogeneity and porosity characteristics from example to example, was always able to protect the underlying cast iron from corrosion. This attests to the ability of the coating obtained by the method according to the invention to increase the corrosion resistance of the braking band of a brake disc.

The examples shown above highlight how the embodiments of the method according to the invention, which guarantee the best effects in terms of corrosion resistance, comprise decarburization of the surface to be coated and immersion in two different aluminum baths, the first of which is substantially free of iron or having iron in an amount classifiable as an impurity.

The method for making a braking band according to the invention can be carried out without requiring complex plants and with very little lead time. All of this results in a very limited increase in the cost and production time of a cast iron braking band.

Finally, the method according to the invention is feasible at processing temperatures compatible with the need to contain distortion on the braking band.

Therefore, the invention thus devised achieves the set objects.

Obviously, in the practice, it may also take shapes and configurations different from the one disclosed above, without for this reason departing from the present scope of protection.

Furthermore, all details may be replaced by technically equivalent elements, and any size, shape, and material may be used according to the needs.

## Claims

1. A method of making a braking band of a cast iron brake disc with increased resistance to wear and corrosion, comprising the following steps:
a) make a braking band of a brake disc in cast iron, preferably in gray cast iron;
b) immersing at least partially said braking band in molten aluminum maintained at a predefined temperature so that the molten aluminum covers at least a predefined surface region of said braking band, said immersion being prolonged for a predefined period of time so as to allow the diffusion of aluminum atoms in the surface microstructure of the cast iron with the consequent formation of iron-aluminum intermetallic compounds at a surface layer of said braking band, thereby generating in said predefined surface region of said braking band a layer consisting of iron-aluminum intermetallic compounds;
c) extracting said braking band from the molten aluminum, wherein said molten aluminum has a silicon content of less than 1% by weight;
d) removing the aluminum remained adherent on said braking band after extraction, so as to expose said layer of intermetallic Iron-Aluminum compounds on the surface, said layer of intermetallic Iron-Aluminum compounds exposed on the surface giving said cast iron braking band a higher resistance to corrosion and wear at said predefined surface region.

2. The method, according to claim 1, wherein said layer of intermetallic Iron-Aluminum compounds is formed at a surface layer of said cast iron braking band in contact with the molten aluminum by a process of diffusion of aluminum atoms within the structure of the cast iron and formation of intermetallic Iron-Aluminum compounds.

3. The method according to claim 1 or 2, wherein said layer of intermetallic Iron-Aluminum compounds comprises FeAl₃ as the prevailing phase of the intermetallic Iron-Aluminum compounds.

4. The method according to any of the preceding claims, wherein said predefined temperature at which the molten aluminum is maintained is not less than 680°C, preferably not more than 750°C, more preferably between 690°C and 710°C, and even more preferably 700°C.

5. The method according to any of the preceding claims, wherein said predefined immersion time is fixed according to the desired thickness of said layer of intermetallic compounds, being the temperature of the molten aluminum equal, said thickness increasing as the immersion time increases, being the immersion time equal, said thickness increasing as the temperature of the molten aluminum increases, preferably said predefined immersion time being between 5 and 60 min, and even more preferably equal to 30 min.

6. The method according to any of the preceding claims, comprising a step (f) of decarburizing said at least one predefined surface region of said braking band up to a predefined depth, said step (f) being conducted before said immersion step (b).

7. The method, according to claim 6, wherein said predefined decarburization depth is equal to or greater than the depth of said layer of intermetallic Iron-Aluminum compounds from the external surface of said braking band, preferably said predefined depth being equal to or greater than 30 um.

8. The method according to claim 6 or 7, wherein in said step f) the decarburization of said at least one predefined surface region of said braking band is carried out by means of an electrolytic process.

9. The method according to any of the preceding claims, wherein said immersion step (b) is conducted in a molten aluminum bath containing iron in solution, wherein the iron content in solution is preferably not more than 5% by weight, and even more preferably between 3% and 5%, and entirely preferably is 4%.

10. The method according to any of the preceding claims, wherein said immersion step (b) takes place in two sub-steps:
- a first immersion sub-step (b1) in a first bath of molten aluminum, substantially free of iron in solution, to obtain on said predefined surface region an initial layer consisting of intermetallic Iron-Aluminum compounds;
- a second immersion sub-step (b2) in a second molten aluminum bath, containing iron in solution, to increase said initial layer until a final layer consisting of intermetallic Iron-Aluminum compounds with a predefined thickness is obtained on said predefined surface region,
wherein the immersion time of said braking band in said first bath is less than the immersion time of said braking band in said second bath.

11. The method according to claim 10, wherein both the first bath and the second bath of molten aluminum have an impurity content not exceeding 1% by weight, wherein they preferably have a silicon content of less than 1% by weight.

12. The method according to claim 10 or 11, wherein said second molten aluminum bath has an iron content in solution not exceeding 5% by weight, and more preferably between 3% and 5%, and even more preferably is 4%.

13. The method according to any of the claims from 10 to 12, wherein both said first bath and said second bath are maintained at a temperature below 680°C, preferably not more than 750°C, more preferably between 690°C and 710°C, and even more preferably 700°C.

14. The method according to any of the claims from 10 to 13, wherein the immersion of said braking band in said first bath is prolonged for a period of time as short as possible, but sufficient to obtain on said predefined surface region an initial layer consisting of intermetallic Iron-Aluminum compounds with a thickness not exceeding 10 um, wherein preferably said immersion time in said first bath is between 3 and 5 minutes if the first bath is at a temperature of about 700°C.

15. The method according to any of the claims from 10 to 14, wherein the immersion time of said braking band in said second bath is set according to the desired thickness of said final layer of intermetallic compounds, being the temperature of the second bath equal, said thickness increasing as the immersion time increases, being the immersion time equal, said thickness increasing as the temperature of the second bath increases.

16. The method according to any of the preceding claims, wherein a surface layer of oxides is removed from the molten aluminum bath prior to said immersion step (b) .

17. The method according to any of the preceding claims, wherein said step (d) of removing the aluminum remained adherent on said braking band after extraction is carried out in two sub-steps, a first removal sub-step d1) being carried out on the braking band just extracted from the molten aluminum to remove the molten aluminum still remained adherent to the braking band and a second removal sub-step d2) being carried out on the braking band extracted from the molten aluminum and cooled to remove the residual solidified aluminum remained after said first removal sub-step d2).

18. The method according to claim 17, comprising a quenching step (e) of said braking band carried out between said first removal sub-step (d1) and said second removal sub-step (d2).

19. The method according to claim 17 or 18, wherein said first removal sub-step d1) is conducted by mechanical shaving of the aluminum while still liquid.

20. The method according to claim 17, 18 or 19, wherein said second removal sub-step (d2) is carried out by chemical removal of the solidified aluminum not mechanically removed, preferably said chemical removal being carried out by exposing the aluminum to ferric chloride for at least 4 minutes so as to cause the following reaction:
Al+ FeCl₃ -> AlCl₃ + Fe
preferably said chemical removal being carried out after said quenching step (e).

21. Braking band of a brake disc, comprising a braking band body made of cast iron, preferably gray cast iron, having at least one braking surface, comprising in correspondence of at least one portion of said braking surface a protective surface layer, **characterized in that** said protective surface layer is a surface layer consisting of one or more intermetallic Iron-Aluminum compounds, said layer of intermetallic Iron-Aluminum compounds giving said cast iron braking band a higher resistance to corrosion and wear on said at least one portion of said braking surface, wherein said protective surface layer substantially does not comprise carbon, in particular does not comprise graphite flakes and wherein the brake band is manufactured by the method according to any of claims 1 to 20.

22. The band according to claim 21, wherein said layer of intermetallic Iron-Aluminum compounds comprises FeAl₃ as the prevailing phase among the intermetallic Iron-Aluminum compounds.

23. The band according to claim 21 or 22, wherein said layer of intermetallic Iron-Aluminum compounds is a diffusive layer, interpenetrated with the microstructure of the cast iron, preferably having a jagged interpenetration profile, more preferably said jagged interpenetration profile having the shape of shark teeth.

24. The band according to any of the claims from 21 to 23, wherein said layer of intermetallic Iron-aluminum compounds has an average thickness between 30 and 200 µm.

25. The band according to any of the claims from 21 to 24, wherein said braking surface has a hardness between 400 and 1000 HV at said layer of intermetallic Iron-aluminum compounds.

## Patentansprüche

1. Verfahren, um ein Bremsband einer Gusseisen-Bremsscheibe mit erhöhter Resistenz gegen Abnutzung und Korrosion herzustellen, umfassend die folgenden Schritte:
a) Herstellen eines Bremsbandes einer Bremsscheibe aus Gusseisen, bevorzugt aus Grauguss;
b) Eintauchen des Bremsbandes zumindest teilweise in geschmolzenes Aluminium, das bei einer vordefinierten Temperatur gehalten wird, so dass das geschmolzene Aluminium zumindest einen vordefinierten Oberflächenbereich des Bremsbandes bedeckt, wobei das Eintauchen für eine vordefinierte Zeitdauer verlängert wird, um die Diffusion von Aluminiumatomen in die Oberflächenmikrostruktur des Gusseisens mit der nachfolgenden Bildung von intermetallischen Eisen-Aluminium-Verbindungen an einer Oberflächenschicht des Bremsbandes zu ermöglichen, wodurch in dem vordefinierten Oberflächenbereich des Bremsbandes eine aus intermetallischen Eisen-Aluminium-Verbindungen bestehende Schicht erzeugt wird;
c) Extrahieren des Bremsbandes aus dem geschmolzenen Aluminium, wobei das geschmolzene Aluminium einen Siliziumgehalt von weniger als 1 Gew.-% aufweist;
d) Entfernen des Aluminiums, das nach dem Extrahieren an dem Bremsband haften geblieben ist, um die Schicht aus intermetallischen Eisen-Aluminium-Verbindungen auf der Oberfläche freizulegen, wobei die Schicht aus intermetallischen Eisen-Aluminium-Verbindungen, die auf der Oberfläche freigelegt ist, dem Gusseisen-Bremsband eine höhere Resistenz gegen Korrosion und Verschleiß an dem vordefinierten Oberflächenbereich verleiht.

2. Verfahren nach Anspruch 1, wobei die Schicht aus intermetallischen Eisen-Aluminium-Verbindungen an einer Oberflächenschicht des Gusseisen-Bremsbandes in Kontakt mit dem geschmolzenen Aluminium durch einen Prozess der Diffusion von Aluminiumatomen innerhalb der Struktur des Gusseisens und Bildung von intermetallischen Eisen-Aluminium-Verbindungen gebildet wird.

3. Verfahren nach Anspruch 1 oder 2, wobei die Schicht aus intermetallischen Eisen-Aluminium-Verbindungen FeAl₃ als die überwiegende Phase der intermetallischen Eisen-Aluminium-Verbindungen umfasst.

4. Verfahren nach einem der vorhergehenden Ansprüche, wobei die vordefinierte Temperatur, bei der das geschmolzene Aluminium gehalten wird, nicht weniger als 680°C, bevorzugt nicht mehr als 750°C, mehr bevorzugt zwischen 690°C und 710°C, und noch mehr bevorzugt 700°C beträgt.

5. Verfahren nach einem der vorhergehenden Ansprüche, wobei die vordefinierte Eintauchzeit entsprechend der gewünschten Dicke der Schicht aus intermetallischen Verbindungen festgelegt wird, wobei wenn die Temperatur des geschmolzenen Aluminiums gleich ist, die Dicke mit zunehmender Eintauchzeit erhöht wird, wobei wenn die Eintauchzeit gleich ist, die Dicke mit zunehmender Temperatur des geschmolzenen Aluminiums erhöht wird, wobei die vordefinierte Eintauchzeit vorzugsweise zwischen 5 und 60 min und noch bevorzugter gleich 30 min beträgt.

6. Verfahren nach einem der vorangehenden Ansprüche, umfassend einen Schritt (f) des Entkohlens des wenigstens einen vordefinierten Oberflächenbereichs des Bremsbandes bis zu einer vordefinierten Tiefe, wobei der Schritt (f) vor dem Eintauchschritt (b) durchgeführt wird.

7. Verfahren nach Anspruch 6, wobei die vordefinierte Entkohlungstiefe gleich oder größer ist als die Tiefe der Schicht aus intermetallischen Eisen-Aluminium-Verbindungen von der externen Fläche des Bremsbandes, wobei bevorzugt die vordefinierte Tiefe gleich oder größer als 30 µm ist.

8. Verfahren nach Anspruch 6 oder 7, wobei in Schritt f) die Entkohlung des mindestens einen vordefinierten Oberflächenbereichs des Bremsbandes mittels eines elektrolytischen Verfahrens durchgeführt wird.

9. Verfahren nach einem der vorangehenden Ansprüche, wobei der Eintauchschritt (b) in einem Aluminium-Schmelzbad durchgeführt wird, das Eisen in Lösung enthält, wobei der Eisengehalt in Lösung bevorzugt nicht mehr als 5 Gew.-%, und noch mehr bevorzugt zwischen 3 und 5 % beträgt, und am meisten bevorzugt 4 % beträgt.

10. Verfahren nach einem der vorhergehenden Ansprüche, wobei der Eintauchschritt (b) in zwei Teilschritten erfolgt:
- einem ersten Eintauch-Teilschritt (b1) in einem ersten Aluminium-Schmelzbad, das im Wesentlichen frei von Eisen in Lösung ist, um auf dem vordefinierten Oberflächenbereich eine anfängliche Schicht zu erhalten, die aus intermetallischen Eisen-Aluminium-Verbindungen besteht;
- einem zweiten Eintauch-Teilschritt (b2) in einem zweiten Aluminium-Schmelzbad, das Eisen in Lösung enthält, um die anfängliche Schicht zu erhöhen, bis eine finale Schicht, bestehend aus intermetallischen Eisen-Aluminium-Verbindungen mit einer vordefinierten Dicke, auf dem vordefinierten Oberflächenbereich erhalten wird, wobei die Eintauchzeit des Bremsbandes in dem ersten Bad geringer ist als die Eintauchzeit des Bremsbandes in dem zweiten Bad.

11. Verfahren nach Anspruch 10, wobei sowohl das erste als auch das zweite Bad aus geschmolzenem Aluminium einen Verunreinigungsgehalt aufweist, der 1 Gew.-% nicht übersteigt, wobei sie bevorzugt einen Siliziumgehalt von weniger als 1 Gew.-% aufweisen.

12. Verfahren nach Anspruch 10 oder 11, wobei das zweite Aluminium-Schmelzbad einen Eisengehalt in Lösung aufweist, der 5 Gew.-% nicht übersteigt, und mehr bevorzugt zwischen 3 und 5 %, und noch mehr bevorzugt 4 % beträgt.

13. Verfahren nach einem der Ansprüche 10 bis 12, wobei sowohl das erste Bad als auch das zweite Bad bei einer Temperatur von weniger als 680°C, bevorzugt nicht mehr als 750°C, mehr bevorzugt zwischen 690°C und 710°C und noch mehr bevorzugt 700°C gehalten werden.

14. Verfahren nach einem der Ansprüche 10 bis 13, wobei das Eintauchen des Bremsbandes in das erste Bad für einen Zeitraum verlängert wird, der so kurz wie möglich ist, aber ausreicht, um auf dem vordefinierten Oberflächenbereich eine anfängliche Schicht zu erhalten, bestehend aus intermetallischen Eisen-Aluminium-Verbindungen mit einer Dicke, die 10 µm nicht übersteigt, wobei bevorzugt die Eintauchzeit in dem ersten Bad zwischen 3 und 5 Minuten beträgt, falls das erste Bad eine Temperatur von etwa 700°C aufweist.

15. Verfahren nach einem der Ansprüche von 10 bis 14, wobei die Eintauchzeit des Bremsbandes in das zweite Bad entsprechend der gewünschten Dicke der finalen Schicht aus intermetallischen Verbindungen festgelegt wird, wobei wenn die Temperatur des zweiten Bades gleich ist, die Dicke mit zunehmender Eintauchzeit erhöht wird, wobei wenn die Eintauchzeit gleich ist, die Dicke mit steigender Temperatur des zweiten Bades erhöht wird.

16. Verfahren nach einem der vorhergehenden Ansprüche, wobei eine Oberflächenschicht aus Oxiden vor dem Eintauchschritt (b) aus dem Aluminium-Schmelzbad entfernt wird.

17. Verfahren nach einem der vorangehenden Ansprüche, wobei der Schritt (d) des Entfernens des Aluminiums, das nach dem Extrahieren an dem Bremsband haften geblieben ist, in zwei Teilschritten durchgeführt wird, wobei ein erster Teilschritt des Entfernens d1), an dem gerade aus der geschmolzenen Aluminium herausgezogenen Bremsband durchgeführt wird, um das geschmolzene Aluminium zu entfernen, das noch an dem Bremsband haften geblieben ist, und ein zweiter Entfernungs-Teilschritt d2), der an dem Bremsband durchgeführt wird, das aus dem geschmolzenen Aluminium extrahiert und abgekühlt wurde, um das restliche verfestigte Aluminium zu entfernen, das nach dem ersten Entfernungs-Teilschritt d2) verblieben ist.

18. Verfahren nach Anspruch 17, umfassend einen Abschreckschritt (e) des Bremsbandes, der zwischen dem ersten Entfernungs-Teilschritt (d1) und dem zweiten Entfernungs-Teilschritt (d2) durchgeführt wird.

19. Verfahren nach Anspruch 17 oder 18, wobei der erste Entfernungs-Teilschritt d1) durch mechanisches Abschaben des noch flüssigen Aluminiums ausgeführt wird.

20. Verfahren nach Anspruch 17, 18 oder 19, wobei der zweite Entfernungs-Teilschritt (d2) durch chemische Entfernung des verfestigten, nicht mechanisch entfernten Aluminiums durchgeführt wird, wobei bevorzugt die chemische Entfernung durchgeführt wird, indem das Aluminium mindestens 4 Minuten lang Eisenchlorid ausgesetzt wird, sodass die folgende Reaktion ausgelöst wird:
AI+ FeCl₃ → AlCl₃ + Fe
wobei bevorzugt die chemische Entfernung nach dem Abschreckungsschritt (e) durchgeführt wird.

21. Bremsband einer Bremsscheibe, umfassend einen Bremsband-Körper hergestellt aus Gusseisen, bevorzugt Grauguss, mit mindestens einer Bremsfläche, umfassend in Verbindung mit mindestens einem Teil der Bremsfläche eine schützende Oberflächenschicht, **dadurch gekennzeichnet, dass** die schützende Oberflächenschicht eine Oberflächenschicht bestehend aus einer oder mehreren intermetallischen Eisen-Aluminium-Verbindungen ist, wobei die Schicht aus intermetallischen Eisen-Aluminium-Verbindungen dem Gusseisen-Bremsband eine höhere Resistenz gegen Korrosion und Verschleiß auf dem wenigstens einen Teil der Bremsoberfläche verleiht, wobei die schützende Oberflächenschicht im Wesentlichen keinen Kohlenstoff umfasst, insbesondere keine Graphitflocken umfasst, und wobei das Bremsband nach dem Verfahren nach einem der Ansprüche 1 bis 20 hergestellt wird.

22. Band nach Anspruch 21, wobei die Schicht aus intermetallischen Eisen-Aluminium-Verbindungen FeAl₃ als die überwiegende Phase unter den intermetallischen Eisen-Aluminium-Verbindungen umfasst.

23. Band nach Anspruch 21 oder 22, wobei die Schicht aus intermetallischen Eisen-Aluminium-Verbindungen eine Diffusionsschicht ist, die mit der Mikrostruktur des Gusseisens interpenetriert ist, bevorzugt eine gezacktes Interpenetrationsprofil aufweist, wobei mehr bevorzugt das gezackte Interpenetrationsprofil die Form von Haifischzähnen aufweist.

24. Band nach einem der Ansprüche 21 bis 23, wobei die Schicht aus intermetallischen Eisen-Aluminium-Verbindungen eine durchschnittliche Dicke zwischen 30 und 200 µm aufweist.

25. Band nach einem der Ansprüche 21 bis 24, wobei die Bremsfläche eine Härte zwischen 400 und 1000 HV an der Schicht aus intermetallischen Eisen-Aluminium-Verbindungen aufweist.

## Revendications

1. Procédé de fabrication d'une bande de freinage d'un disque de frein en fonte à résistance accrue à l'usure et à la corrosion, comprenant les étapes suivantes :
a) la fabrication d'une bande de freinage d'un disque de frein en fonte, de préférence en fonte grise ;
b) l'immersion au moins partielle de ladite bande de freinage dans de l'aluminium en fusion maintenu à une température prédéfinie de telle sorte que l'aluminium en fusion recouvre au moins une région de surface prédéfinie de ladite bande de freinage, ladite immersion étant prolongée pendant une période prédéfinie de façon à permettre la diffusion d'atomes d'aluminium dans la microstructure de surface de la fonte avec la formation conséquente de composés de fer-aluminium intermétalliques au niveau d'une couche de surface de ladite bande de freinage, ce qui permet de générer une couche constituée de composés de fer-aluminium intermétalliques dans ladite région de surface prédéfinie de ladite bande de freinage ;
c) l'extraction de ladite bande de freinage de l'aluminium en fusion, dans lequel ledit aluminium en fusion a une teneur en silicium inférieure à 1 % en poids ;
d) l'élimination de l'aluminium restant collé à ladite bande de freinage après l'extraction, de façon à exposer ladite couche de composés de fer-aluminium intermétalliques sur la surface, ladite couche de composés de fer-aluminium intermétalliques exposée sur la surface conférant à ladite bande de freinage en fonte une plus grande résistance à la corrosion et à l'usure au niveau de ladite région de surface prédéfinie.

2. Procédé selon la revendication 1, dans lequel ladite couche de composés de fer-aluminium intermétalliques est formée au niveau d'une couche de surface de ladite bande de freinage en fonte en contact avec l'aluminium en fusion par un processus de diffusion d'atomes d'aluminium à l'intérieur de la structure de la fonte et de formation de composés de fer-aluminium intermétalliques.

3. Procédé selon la revendication 1 ou 2, dans lequel ladite couche de composés de fer-aluminium intermétalliques comprend du FeAl₃ en tant que phase dominante des composés de fer-aluminium intermétalliques.

4. Procédé selon l'une quelconque des revendications précédentes, dans lequel ladite température prédéfinie à laquelle l'aluminium en fusion est maintenu n'est pas inférieure à 680 °C, de préférence n'est pas inférieure à 750 °C, de manière plus préférée est comprise entre 690 °C et 710 °C, et de manière encore plus préférée est de 700 °C.

5. Procédé selon l'une quelconque des revendications précédentes, dans lequel ledit temps d'immersion prédéfini est fixé selon l'épaisseur souhaitée de ladite couche de composés intermétalliques, la température de l'aluminium en fusion étant égale, ladite épaisseur augmentant à mesure que le temps d'immersion augmente, le temps d'immersion étant égal, ladite épaisseur augmentant à mesure que la température de l'aluminium en fusion augmente, de préférence ledit temps d'immersion prédéfini étant compris entre 5 et 60 min, et de manière encore plus préférée égal à 30 min.

6. Procédé selon l'une quelconque des revendications précédentes, comprenant une étape (f) de décarburation de ladite au moins une région de surface prédéfinie de ladite bande de freinage jusqu'à une profondeur prédéfinie, ladite étape (f) étant effectuée avant ladite étape d'immersion (b).

7. Procédé selon la revendication 6, dans lequel ladite profondeur de décarburation prédéfinie est supérieure ou égale à la profondeur de ladite couche de composés de fer-aluminium intermétalliques à partir de la surface externe de ladite bande de freinage, de préférence ladite profondeur prédéfinie étant supérieure ou égale à 30 µm.

8. Procédé selon la revendication 6 ou 7, dans lequel dans ladite étape f), la décarburation de ladite au moins une région de surface prédéfinie de ladite bande de freinage est effectuée au moyen d'un processus électrolytique.

9. Procédé selon l'une quelconque des revendications précédentes, dans lequel ladite étape d'immersion (b) est effectuée dans un bain d'aluminium en fusion contenant du fer en solution, dans lequel la teneur en fer en solution est de préférence de pas plus de 5 % en poids, et de manière encore plus préférée est comprise entre 3 % et 5 %, et de manière préférée entre toutes est de 4 %.

10. Procédé selon l'une quelconque des revendications précédentes, dans lequel ladite étape d'immersion (b) se déroule en deux sous-étapes :
- une première sous-étape d'immersion (b1) dans un premier bain d'aluminium en fusion, sensiblement exempt de fer en solution, pour obtenir une couche initiale constituée de composés de fer-aluminium intermétalliques sur ladite région de surface prédéfinie ;
- une deuxième sous-étape d'immersion (b2) dans un deuxième bain d'aluminium en fusion, contenant du fer en solution, pour augmenter ladite couche initiale jusqu'à ce qu'une couche finale constituée de composés de fer-aluminium intermétalliques d'une épaisseur prédéfinie soit obtenue sur ladite région de surface prédéfinie,
dans lequel le temps d'immersion de ladite bande de freinage dans ledit premier bain est inférieur au temps d'immersion de ladite bande de freinage dans ledit deuxième bain.

11. Procédé selon la revendication 10, dans lequel le premier bain et le deuxième bain d'aluminium en fusion ont tous deux une teneur en impuretés ne dépassant pas 1 % en poids, dans lequel ceux-ci ont de préférence une teneur en silicium inférieure à 1 % en poids.

12. Procédé selon la revendication 10 ou 11, dans lequel ledit deuxième bain d'aluminium en fusion a une teneur en fer en solution ne dépassant pas 5 % en poids, et de manière plus préférée comprise entre 3 % et 5 %, et de manière encore plus préférée de 4 %.

13. Procédé selon l'une quelconque des revendications 10 à 12, dans lequel ledit premier bain et ledit deuxième bain sont tous deux maintenus à une température inférieure à 680 °C, de préférence non supérieure à 750 °C, de manière plus préférée comprise entre 690 °C et 710 °C, et de manière encore plus préférée de 700 °C.

14. Procédé selon l'une quelconque des revendications 10 à 13, dans lequel l'immersion de ladite bande de freinage dans ledit premier bain est prolongée pendant une période aussi courte que possible, mais suffisante pour obtenir, sur ladite région de surface prédéfinie, une couche initiale constituée de composés de fer-aluminium intermétalliques d'une épaisseur ne dépassant pas 10 µm, dans lequel de préférence ledit temps d'immersion dans ledit premier bain est compris entre 3 et 5 minutes si le premier bain est à une température d'environ 700 °C.

15. Procédé selon l'une quelconque des revendications 10 à 14, dans lequel le temps d'immersion de ladite bande de freinage dans ledit deuxième bain est réglé selon l'épaisseur souhaitée de ladite couche finale de composés intermétalliques, la température du deuxième bain étant égale, ladite épaisseur augmentant à mesure que le temps d'immersion augmente, le temps d'immersion étant égal, ladite épaisseur augmentant à mesure que la température du deuxième bain augmente.

16. Procédé selon l'une quelconque des revendications précédentes, dans lequel une couche de surface d'oxydes est éliminée du bain d'aluminium en fusion avant ladite étape d'immersion (b).

17. Procédé selon l'une quelconque des revendications précédentes, dans lequel ladite étape (d) d'élimination de l'aluminium restant collé à ladite bande de freinage après l'extraction est effectuée en deux sous-étapes, une première sous-étape d'élimination d1) étant effectuée sur la bande de freinage qui vient d'être extraite de l'aluminium en fusion pour éliminer l'aluminium en fusion restant encore collé à la bande de freinage et une deuxième sous-étape d'élimination d2) étant effectuée sur la bande de freinage extraite de l'aluminium en fusion et refroidie pour éliminer l'aluminium solidifié résiduel restant après ladite première sous-étape d'élimination d2).

18. Procédé selon la revendication 17, comprenant une étape de trempe (e) de ladite bande de freinage effectuée entre ladite première sous-étape d'élimination (d1) et ladite deuxième sous-étape d'élimination (d2).

19. Procédé selon la revendication 17 ou 18, dans lequel ladite première sous-étape d'élimination d1) est effectuée par rasage mécanique de l'aluminium alors qu'il est encore liquide.

20. Procédé selon la revendication 17, 18 ou 19, dans lequel ladite deuxième sous-étape d'élimination (d2) est effectuée par élimination chimique de l'aluminium solidifié non éliminé mécaniquement, de préférence ladite élimination chimique étant effectuée par exposition de l'aluminium à du chlorure ferrique pendant au moins 4 minutes de façon à provoquer la réaction suivante :
Al+ FeCl₃ → AlCl₃ + Fe
de préférence ladite élimination chimique étant effectuée après ladite étape de trempe (e).

21. Bande de freinage d'un disque de frein, comprenant un corps de bande de freinage constitué de fonte, de préférence de fonte grise, ayant au moins une surface de freinage, comprenant, en correspondance avec au moins une partie de ladite surface de freinage, une couche de surface protectrice, **caractérisée en ce que** ladite couche de surface protectrice est une couche de surface constituée d'un ou de plusieurs composés de fer-aluminium intermétalliques, ladite couche de composés de fer-aluminium intermétalliques conférant à ladite bande de freinage en fonte une plus grande résistance à la corrosion et à l'usure sur ladite au moins une partie de ladite surface de freinage, dans laquelle ladite couche de surface protectrice ne comprend sensiblement pas de carbone, en particulier ne comprend pas de lamelles de graphite, et dans laquelle la bande de freinage est fabriquée par le procédé selon l'une quelconque des revendications 1 à 20.

22. Bande selon la revendication 21, dans laquelle ladite couche de composés de fer-aluminium intermétalliques comprend du FeAl₃ en tant que phase dominante parmi les composés de fer-aluminium intermétalliques.

23. Bande selon la revendication 21 ou 22, dans laquelle ladite couche de composés de fer-aluminium intermétalliques est une couche de diffusion, interpénétrée par la microstructure de la fonte, de préférence ayant un profil d'interpénétration dentelé, de manière davantage préférée ledit profil d'interpénétration dentelé ayant la forme de dents de requin.

24. Bande selon l'une quelconque des revendications 21 à 23, dans laquelle ladite couche de composés de fer-aluminium intermétalliques a une épaisseur moyenne comprise entre 30 et 200 µm.

25. Bande selon l'une quelconque des revendications 21 à 24, dans laquelle ladite surface de freinage a une dureté comprise entre 400 et 1 000 HV au niveau de ladite couche de composés de fer-aluminium intermétalliques.
